# EUROPEAN PATENT APPLICATION

(11) **EP 4 815 485 A1**
(43) Date of publication of application: **30.09.2026**
(21) Application number: 26166663.0
(22) Date of filing: 23.03.2026
(51) Int. Cl.: H04N 23/695, H04N 23/69, H04N 23/66, H04N 23/60

(54) **CONTROL APPARATUS AND CONTROL METHOD FOR THE SAME**

(30) Priority: 24.03.2025 JP 2025048950
(71) Applicant: Canon Kabushiki Kaisha, Tokyo 146-8501 (JP)
(72) Inventor: MIYAMAE, Kyoko, Ohta-ku, Tokyo, 146-8501 (JP)
(74) Representative: TBK

(57) **Abstract**

A control apparatus (1100) comprises: obtainment means (1103) for obtaining an angle value indicating a shooting direction of an image capturing apparatus; first determination means (1105) for determining a first angle reference value, in a case where a state in which change in the obtained angle value is less than a predetermined value continues for a predetermined time period, and determining a second angle reference value after the first angle reference value is determined; and control means (1112) for controlling an angle of view of the image capturing apparatus, according to a first difference between the first angle reference value and the second angle reference value.

## Description

### TECHNICAL FIELD

The present disclosure relates to pan-tilt-zoom (PTZ) control of image shooting.

### BACKGROUND

One use case of auto-tracking involves changing the size of a subject according to an action (standing, sitting, etc.) of the subject and performing zoom control. Video effects that cannot be represented with a fixed size can be added by changing the size of the tracked subject. There are technologies that infer the movement of a subject from position information of the subject on the screen. However, there is a problem in that determination errors due to deviation in the detection results tend to occur when performing determination using only the position of the subject on the screen. Susceptibility to the effects of error caused by spherical coordinate transformation when the subject position is close to the outside of the screen is also a problem.

Japanese Patent No. 6437066 (Patent Document 1) discloses a method of determining the amount of movement of a camera on the basis of angular velocity information of the camera, and performing zoom-out control if the amount of movement is at or above a threshold and zoom-in control if the amount of movement is at or below a different threshold.

### SUMMARY

However, with the technology disclosed in Patent Document 1, there is a problem in that when the camera is frequently moved due to frequent movement of the subject, zoom-in/zoom-out control is performed excessively and image quality deteriorates.

The present disclosure provides a technology that is able to perform more appropriate pan-tilt-zoom (PTZ) control during image shooting.

The present disclosure in its first aspect provides a control apparatus as specified in claim 1. Optional features are specified in claim 2 to 12.

The present disclosure in its second aspect provides a control apparatus as specified in claim 13.

The present disclosure in its third aspect provides a control method as specified in claim 14.

The present disclosure in its fourth aspect provides a computer program as specified in claim 15.

Features of various embodiments will become apparent from the following description of embodiments with reference to the attached drawings. The following description of embodiments is described by way of example.

### BRIEF DESCRIPTION OF THE DRAWINGS

The accompanying drawings, which are incorporated in and constitute a part of the specification, illustrate example embodiments of the present disclosure, and together with the description, serve to explain the principles of the example embodiments.
FIG. 1 is a diagram showing an overall configuration of an image shooting system.
FIG. 2 is a diagram showing a functional configuration of the image shooting system.
FIG. 3 is a diagram illustrating a method of determining a tilt reference value.
FIGS. 4A and 4B are diagrams illustrating the temporal change in a tilt value during subject tracking.
FIGS. 5A and 5B are flowcharts showing a control procedure during subject tracking.
FIG. 6 is a diagram showing a functional configuration of an image shooting system (second embodiment).
FIG. 7 is a diagram illustrating the temporal change in tilt and pan values during subject tracking.
FIGS. 8A and 8B are flowcharts showing a control procedure during subject tracking (second embodiment).
FIG. 9 is a diagram showing a functional configuration of an image shooting system (third embodiment).
FIG. 10 is a diagram illustrating the temporal change in tilt and zoom values during subject tracking.
FIGS. 11A and 11B are flowcharts showing a control procedure during subject tracking (third embodiment).
FIG. 12 is a diagram showing a functional configuration of an image shooting system (fourth embodiment).
FIG. 13 is a diagram illustrating a control for changing a subject size that uses a size correction region.
FIGS. 14A and 14B are flowcharts showing a control procedure during subject tracking (fourth embodiment).

### DESCRIPTION OF THE EMBODIMENTS

Hereinafter, example embodiments will be described in detail with reference to the attached drawings. Note, the following embodiments are not intended to limit the scope of the claims. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

### First Embodiment

A control apparatus that performs pan-tilt-zoom (PTZ) control in an image shooting system for tracking and shooting images of a subject will be described below as an example of a first embodiment of a control apparatus according to the present disclosure.

### Apparatus Configuration

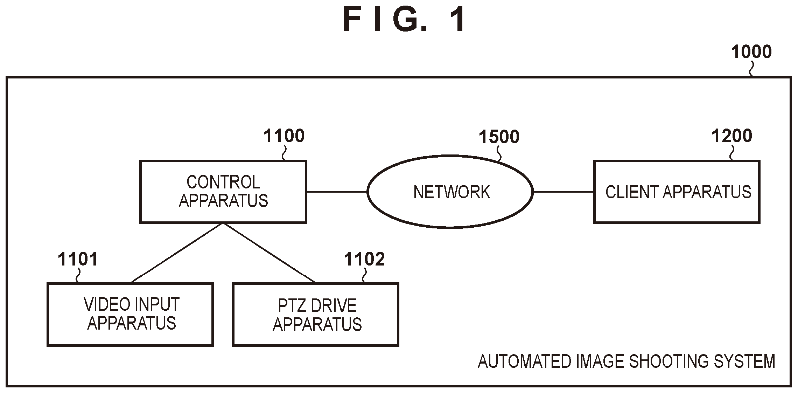

FIG. 1 is a diagram showing the overall configuration of the image shooting system. An image shooting system 1000 includes a control apparatus 1100, a video input apparatus 1101, a PTZ drive apparatus 1102, and a client apparatus 1200. The video input apparatus 1101 is an apparatus provided with an imaging optical system and an image sensor, such as a camera, for example. The PTZ drive apparatus 1102 performs pan-tilt control (direction control) and zoom control (angle-of-view control) for changing a shooting range of the video input apparatus 1101. Also the control apparatus 1100 and the client apparatus 1200 are, for example, connected via a network 1500.

The control apparatus 1100 performs shooting control based on tracking setting information and PTZ control information input from the client apparatus 1200. Also, the control apparatus 1100 outputs video obtained through image shooting to the client apparatus 1200. As will be described in detail later, the control apparatus 1100 detects a subject to be tracked in video obtained by the video input apparatus 1101, which is a camera or the like, based on the input tracking setting information. The control apparatus 1100 then controls the shooting direction (imaging direction) and/or shooting angle (imaging angle) of view with the PTZ drive apparatus 1102 such that the subject to be tracked remains in a predetermined position (e.g., center) of the video.

The client apparatus 1200 is constituted by a personal computer (PC) or the like. The client apparatus 1200 receives tracking setting information and PTZ control information from a user via an input apparatus such as a keyboard, a mouse, a joystick, or a button, and outputs the received tracking setting information and PTZ control information to the control apparatus 1100 over the network 1500. Also, when shot video is input over the network 1500, the client apparatus 1200 displays the shot video on a video display apparatus such as a monitor. Note that the input apparatus may utilize a graphical user interface (GUI).

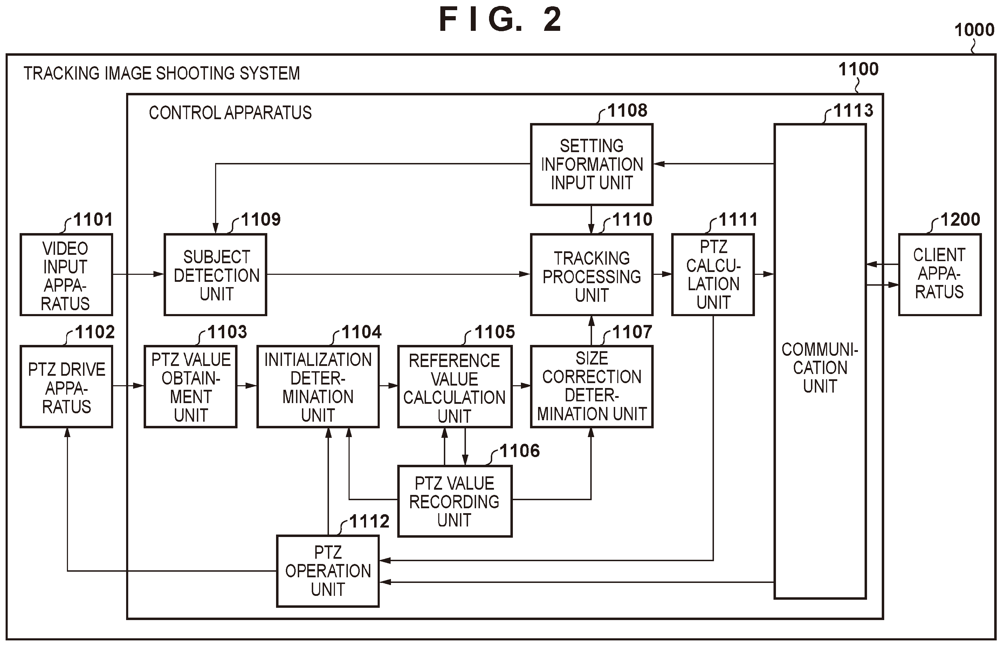

FIG. 2 is a diagram showing the functional configuration of the image shooting system in the first embodiment. The control apparatus 1100 performs PTZ control on the basis of video information obtained from video input apparatus 1101 and the tracking setting information obtained from the client apparatus 1200, and shoots images of a tracking target.

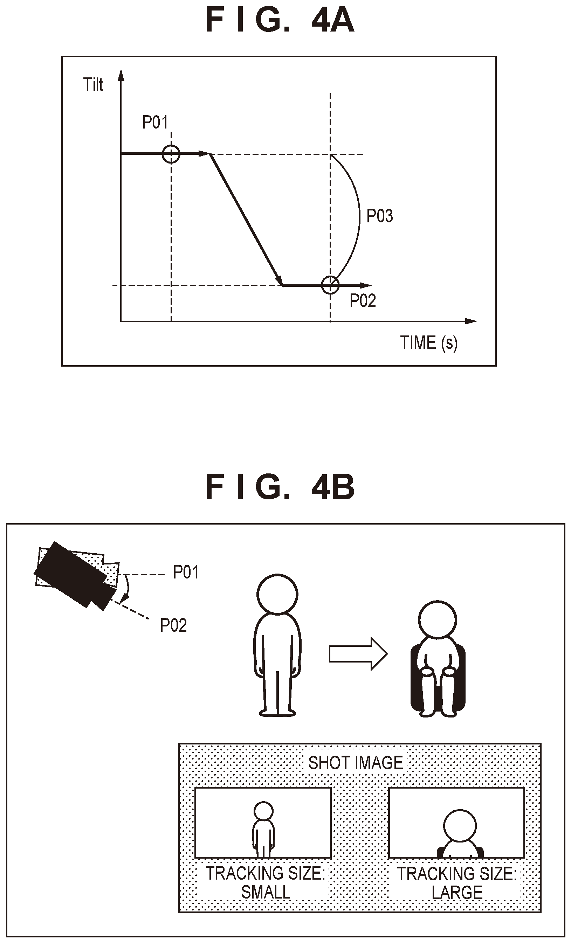

At that time, zoom control for changing the tracking size (target size of subject within shot video during tracking and shooting) based on changes in the tilt value (value of tilt angle) over time is performed. In particular, in the following description, as will be described later with reference to FIG. 4B, it is assumed that the control apparatus 1100 performs tracking and shooting such that the tracking size is set to "large" when the tracked subject is sitting and is set to "small" when the tracked subject is standing. This control may be referred to below as the "size correction function".

The control apparatus 1100 has a PTZ value obtainment unit 1103, an initialization determination unit 1104, a reference value calculation unit 1105, a PTZ value recording unit 1106, and a size correction determination unit 1107. Also, the control apparatus 1100 has a setting information input unit 1108, a subject detection unit 1109, a tracking processing unit 1110, a PTZ calculation unit 1111, a PTZ operation unit 1112, and a communication unit 1113.

The PTZ value obtainment unit 1103 obtains the current PTZ values from the PTZ drive apparatus 1102 and outputs the obtained PTZ values to the initialization determination unit 1104. In the first embodiment, the current tilt value is extracted from the obtained PTZ values and output to the initialization determination unit 1104.

The initialization determination unit 1104 determines whether to initialize a tilt reference value (tilt angle reference value), based on a tilt history, the current tilt value, and PTZ operation information. Here, the tilt history is recorded in the PTZ value recording unit 1106. In the present embodiment, it is determined that initialization is necessary when there is no tilt history (at the start of tracking) or when PTZ operation information (from client apparatus 1200) is input. The tilt reference value may, however, be initialized under other conditions, such as when the difference from the previous tilt value is greater than a threshold.

Also, in the present embodiment, it is assumed that the PTZ operation information is input from the client apparatus 1200, but the present disclosure is not limited thereto as long as the fact that PTZ control other than tracking processing has been performed can be known. The initialization determination unit 1104 outputs an initialization instruction to the reference value calculation unit 1105 only if it determined that the tilt reference value needs to be initialized.

The reference value calculation unit 1105 updates the tilt reference value using the current tilt value and the tilt history.

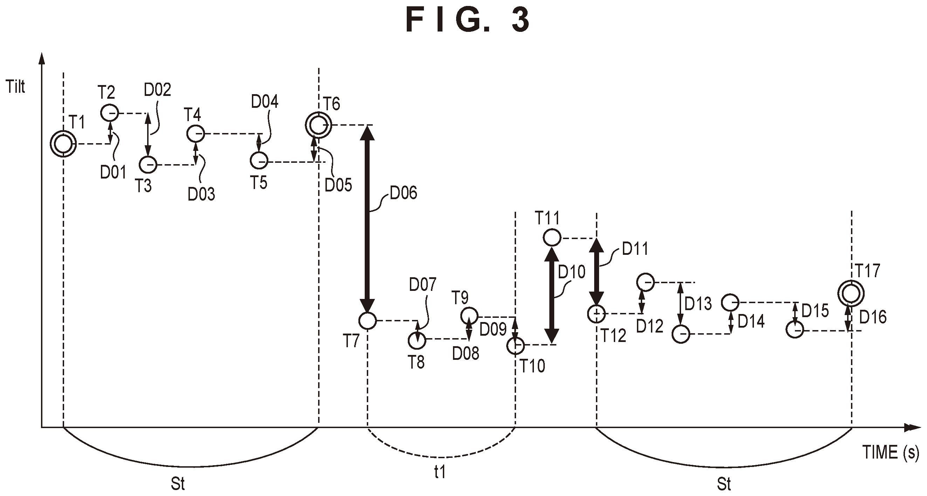

FIG. 3 is a diagram illustrating a method of determining the tilt reference value. The horizontal axis in FIG. 3 is elapsed time, and the vertical axis is tilt value. In FIG. 3, T1 to T17 indicate the tilt values at respective points in time. T1 is the initial tilt value after the start of tracking. Also, D01 to D16 indicate the difference from the previous tilt value (tilt value at immediately previous point in time). t1 illustratively shows the period in which the tilt value is stable (amount of change is within threshold) in the time period from time T7. St represents a tilt reference determination period.

In the present embodiment, when an initialization instruction is input, the tilt value immediately after initialization is taken as the initial tilt reference value. The tilt value when tilt initially becomes stable may also be used as the initial tilt reference value. In the present embodiment, the change amount threshold is Dx and the reference determination period is St = 1 second.

When the initialization instruction and the tilt value (in this case, T1) are input, the reference value calculation unit 1105 determines T1 as the new tilt reference value, and outputs the new tilt reference value and the current tilt value to the PTZ value recording unit 1106.

If the initialization instruction is not input (from T2 onward), the difference from the previous tilt value is calculated in order to check the change in the tilt value over time, and the duration for which the difference is less than the change amount threshold Dx (stable tilt time period) is measured. If the stable tilt time period is greater than or equal to the reference determination period St, it is determined that the tilt value is stable, and thus the tilt reference value is calculated and a tracking size correction determination instruction is output to the size correction determination unit 1107.

In the example shown in FIG. 3, the tilt difference values D01 to D05 from T1 to T6 are all less than or equal to the threshold Dx. Thus, since the stable tilt time period is greater than or equal to St, it is determined that tilt is stable, and T6 is set as the tilt reference value. On the other hand, in the example shown in FIG. 3, the tilt value is stable for the period of t1 (< St) from T7 to T10, but Dx < D10 at T11. Thus, it is determined that the tilt value is unstable, and the stable tilt time period is set to 0. The tilt reference value is not updated at this time.

It is also determined that tilt is stable for T12 to T17, similarly to T1 to T6, and T17 is set as the tilt reference value. The reference value calculation unit 1105 outputs the calculated tilt reference value and the current tilt value to the PTZ value recording unit 1106, and outputs the correction determination instruction to the size correction determination unit 1107.

In the present embodiment, the tilt reference value is determined by the method described above, but the tilt reference value may be determined by other determination methods. For example, as long as the values utilized are values over a period in which the amount of change in tilt for a certain period is stable, the tilt reference value can also be determined utilizing the first or last value of the period, an average value for the period, a median value for the period, or the like. By providing a time span to the determination of the tilt reference value in this way, it becomes possible to suppress zoom operation among the operations accompanying short-term changes in tilt. For example, control can be performed so as to perform the zoom operation when the posture of the person who is the tracked subject changes (the person carries out an action such as standing or sitting), and so as to not perform the zoom operation when the person carries out an action such as nodding or bowing.

When the current tilt value and tilt reference value are input from the reference value calculation unit 1105, the PTZ value recording unit 1106 records the current tilt value as history information. The (previously set) tilt reference value that was held is then recorded as the old tilt reference value, and the tilt reference value that is newly input is recorded as the new tilt reference value. Here, the tilt reference values are recorded as history information (new tilt reference value and old tilt reference value), but the present disclosure is not limited thereto. If the tilt reference value changes, time information may also be recorded as history information by saving the time information in association with the tilt reference value. In this case, the tilt reference value associated with the most recent time information is set as the new tilt reference value. Furthermore, the tilt reference value associated with the next most recent time information previous to the new tilt reference value may be processed as the old tilt reference value.

The PTZ value recording unit 1106 outputs past tilt values as history information to the reference value calculation unit 1105 and the initialization determination unit 1104. Also, the new tilt reference value and the old tilt reference value are output when there is a request from the size correction determination unit 1107.

When the correction determination instruction is input, the size correction determination unit 1107 obtains the new tilt reference value and the old tilt reference value from the PTZ value recording unit 1106 and determines whether to correct the tracking size.

FIG. 4A is a diagram illustrating the temporal change in the tilt value during subject tracking. FIG. 4B is an image diagram of the action (standing state → sitting state) of the subject during the subject tracking in FIG. 4A.

In FIGS. 4A and 4B, P01 represents the old tilt reference value, P02 represents the new tilt reference value, and P03 represents the difference between the new tilt reference value and the old reference value. In the present embodiment, a tracking size correction threshold (tilt), which is the threshold for determining to correct the tracking size, is Dt. For example, Dt is a tilt angle corresponding to 5 percent of the shooting angle of view (tilt direction). For example, if the shooting angle of view (tilt direction) is 60 degrees, the Dt is 3 degrees. In this way, the tilt correction threshold can be appropriately changed according to changes in the shooting angle of view (imaging range) and changes in the distance between the tracking target and the camera.

When the new tilt reference value and the old tilt reference value are input, the size correction determination unit 1107 calculates the difference P03 therebetween. If the difference is greater than or equal to a threshold Dt, the tracking size is corrected.

In FIG. 4A, when the difference P03 is greater than or equal to Dt, here, "old tilt reference value P01 > new tilt reference value P02", and thus it is determined that the subject carried out "the action of sitting (change from standing state to sitting state)", and the tracking size is changed to "large". Note that if the difference P03 is greater than or equal to Dt and "old tilt reference value P01 < new tilt reference value P02", it is determined that the subject carried out "the action of standing (change from sitting state to standing state)" and the tracking size is changed to "small". Note that, in the present embodiment, the tracking size is set to "small" at the time of the standing state and to "large" at the time of the sitting state, but may be set in reverse thereto. Note also that "large" and "small" are relative sizes. That is, different tracking sizes need only be set for the standing state and the sitting state. The size correction determination unit 1107 outputs information of the determined tracking size to the tracking processing unit 1110.

The setting information input unit 1108 outputs the tracking setting information received from the communication unit 1113 to the subject detection unit 1109 and the tracking processing unit 1110. In the present embodiment, selection information, position and size information of the tracking target described below are assumed to be included as tracking setting information, but other information may be included. For example, information on whether the size correction function setting is ON or OFF can be included.

The subject detection unit 1109 performs subject detection processing for detecting a subject in video from the video information input from the video input apparatus 1101, and outputs detection information to the tracking processing unit 1110. In the present embodiment, facial detection is performed as the subject detection processing, but detection information of the head or other features may be used. Any method that is able to detect the face, such as template matching or semantic segmentation, may be used in the facial detection processing. Since template matching and semantic segmentation are known technologies, detailed description thereof will be omitted.

The tracking processing unit 1110 performs tracking processing on the basis of the tracking setting information input from the setting information input unit 1108, the tracking size input from the size correction determination unit 1107, and facial information input from the subject detection unit 1109. The tracking size input from the size correction determination unit 1107 is preferentially used. Note that, if tracking processing has not been performed, tracking processing is started after selecting a tracking target. If tracking processing has been performed, tracking processing is performed after inputting detected facial information.

As for the method of selecting the tracking target, any selection method that involves, for example, selecting one person from a plurality of people (plurality of pieces of facial information) as a given person to be tracked may be utilized. For example, the tracking target may be determined by causing the user to select a facial image to be tracked, or a facial image closest to the center of the screen in video that is shot may be determined as the tracking target.

As for tracking processing, any technique that enables position information of the tracking target in the current frame to be determined from position information of the tracking target in the previous frame and input facial information can be utilized. For example, a technique that takes a position mapped by a position predicted from the movement history of the tracking target and a position of the detected face may be taken as the position of the tracking target. The tracking processing unit 1110 outputs the tracking processing result and the video information to the PTZ calculation unit 1111.

When the tracking processing result is input, the PTZ calculation unit 1111 calculates PTZ values that result in a shooting range in which the tracking target appears so as to satisfy the tracking setting information, and outputs a PTZ control command to the PTZ operation unit 1112. Furthermore, the video information is output to the communication unit 1113. The PTZ operation unit 1112 outputs a control command to the PTZ drive apparatus 1102 on the basis of the input PTZ control command. The PTZ drive apparatus 1102 performs a PTZ drive on the basis of the input control command.

The communication unit 1113 transmits the video information input from the PTZ calculation unit 1111 to the client apparatus 1200. Also, the communication unit 1113 outputs the tracking setting information input from the client apparatus to the setting information input unit 1108, and outputs the PTZ control information to the PTZ operation unit 1112.

### Operations of Apparatus

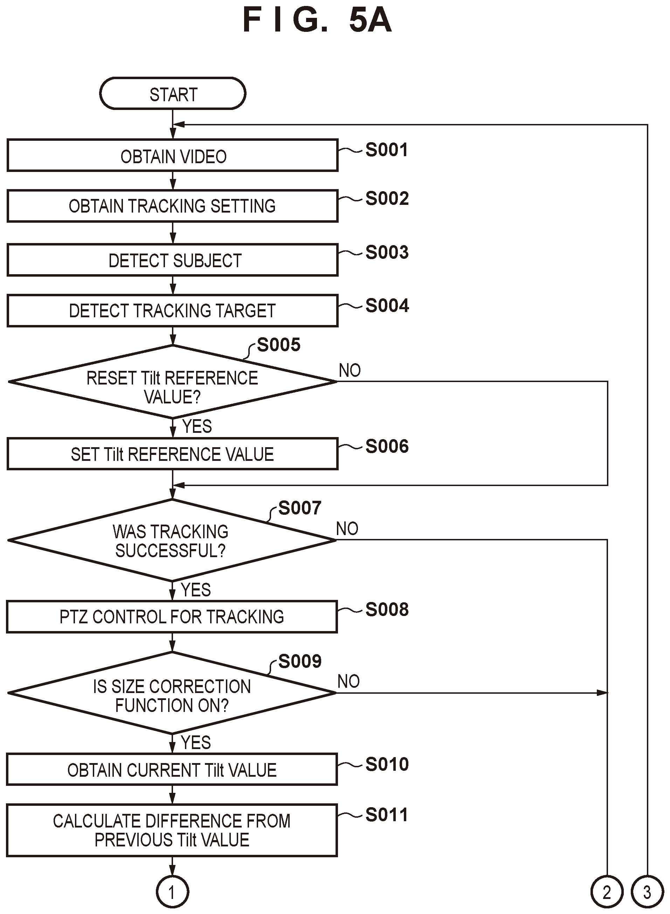

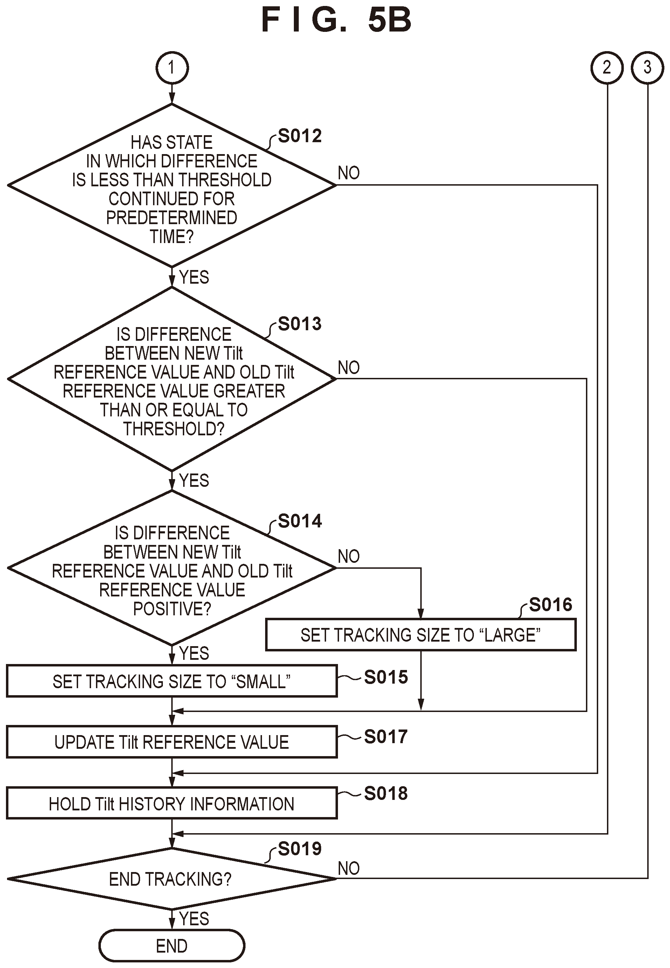

FIGS. 5A and 5B are flowcharts showing a control procedure during subject tracking in the first embodiment. When the tracking image shooting system 1000 is started by a user operation, the video input apparatus 1101 starts shooting and outputs video to the control apparatus 1100. Note that the loop processing of steps S001 to S019 is performed on each frame image included in video (or on frame image of every predetermined frame). That is, the loop processing is executed at a predetermined time interval. Note that, in the first iteration of loop processing (processing on the initial frame image), steps S009 and S011 to S017 can be skipped.

In step S001, the subject detection unit 1109 obtains video (frame images). In step S002, the setting information input unit 1108 obtains tracking setting information (input by user from client apparatus 1200) and outputs the obtained tracking setting information to the subject detection unit 1109 and the tracking processing unit 1110. In step S003, the subject detection unit 1109 performs subject detection processing for detecting a subject in the video (frame images). In step S004, the tracking processing unit 1110 selects a tracking target from facial information and performs tracking processing. The coordinates and size information of the tracking target are output to the PTZ calculation unit 1111 as the tracking processing result.

In step S005, the initialization determination unit 1104 determines whether to initialize the tilt reference value. The processing proceeds to step S006 if true (YES in step S005), and proceeds to step S007 if false (NO in step S005). In step S006, the reference value calculation unit 1105 sets the current tilt value as the tilt reference value.

In step S007, the tracking processing unit 1110 determines whether the tracking processing was successful. The processing proceeds to step S008 if true (YES in step S007), and proceeds to step S019 if false (NO in step S007). In step S008, the PTZ calculation unit 1111 calculates the PTZ values on the basis of the input tracking processing result and tracking setting information. Then, based on the calculated PTZ values, the PTZ operation unit 1112 outputs a PTZ command to the PTZ drive apparatus 1102 and performs PTZ control.

In step S009, the tracking processing unit 1110 determines whether the size correction function (function for changing tracking size according to changes in tilt value) setting is ON, based on the input tracking setting information. If true (YES in step S009), the processing proceeds to step S010. If false (NO in step S009), the processing proceeds to step S019. In step S010, the PTZ value obtainment unit 1103 obtains the current tilt value, which is an angle value indicating the current shooting direction, from the PTZ drive apparatus 1102. In step S011, the reference value calculation unit 1105 calculates the difference between the previous tilt value and the current tilt value. Note that the previous tilt value is the tilt value in the immediately previous iteration of loop processing.

In step S012, the reference value calculation unit 1105 determines whether a state in which the difference is less than a threshold x (less than a first angle) has continued for a predetermined time period. Note that it is favorable to prepare a counter for the state in which the difference is less than the threshold x and to determine, from the number of iterations indicated by the counter, whether the above state has continued for the predetermined time period. That is, the counter is incremented if the difference is less than threshold x, and is reset if the difference is greater than or equal to the threshold x. Alternatively, the time at which it is determined that the difference is less than the threshold x may be obtained from a timer and held, and the elapsed time from the held time may be calculated in subsequent iterations of the loop processing. If true (YES in step S012), the processing proceeds to step S013. If false (NO in step S012), the processing proceeds to step S018.

In step S013, the size correction determination unit 1107 determines whether the difference between the new tilt reference value and the old tilt reference value is greater than or equal to a threshold (greater than or equal to a second angle). The processing proceeds to step S014 if true (YES in step S013), and proceeds to step S017 if false (NO in step S013). Note that if an old tilt reference value does not exist, the processing proceeds to step S017.

In step S014, the size correction determination unit 1107 determines whether the difference between the new tilt reference value and the old tilt reference value is positive (i.e., upward change). If true (YES in step S014), the processing proceeds to step S015. If false (NO in step S014), the processing proceeds to step S016. In step S015, the size correction determination unit 1107 determines that the subject is standing and sets the tracking size to "small". On the other hand, in step S016, the size correction determination unit 1107 determines that the subject is sitting and sets the tracking size to "large". That is, if the difference is greater than or equal to the threshold in step S013, the tracking size is changed, and if the difference is less than the threshold, the tracking size is not changed. Note that the control apparatus 1100 controls the zoom value via the PTZ drive apparatus 1102, such that the size of the subject matches the tracking size set in step S015 or S016.

In step S017, the reference value calculation unit 1105 updates the tilt reference value, which is the angle reference value corresponding to the direction in which the subject is present. When the tilt value and tilt reference value are input, the PTZ value recording unit 1106, in step S018, records the tilt value as history information. That is, the tilt reference value that was held is recorded as the old tilt reference value, and the tilt reference value that is newly input is recorded as the new tilt reference value.

In step S019, the control apparatus 1100 determines whether to end the automated tracking and shooting. For example, the determination is made depending on whether the user presses a stop switch (not shown) for stopping the automated tracking and shooting on the client apparatus 1200. The processing proceeds to step S001 if false (NO in step S019), and is ended if true (YES in step S019).

As described above, according to the first embodiment, the tracking size (subject size) is changed on the basis of changes in the tilt value over time. In particular, by providing a time span to the determination of the tilt reference value, it becomes possible to suppress zoom operation among the operations accompanying short-term changes in tilt. For example, control can be performed so as to not change the tracking size when the subject carries out an action such as nodding or bowing. Thus, it becomes possible to more effectively realize video effects, such as making the subject appear larger when the tracked subject is in a sitting state, and making the subject appear smaller when the subject is moving in a standing state.

In the above description, a configuration that changes the subject size based on the temporal change in tilt on the premise of performing tracking processing is described, but a configuration may also be adopted in which zoom control is performed on the basis of the temporal change in tilt without performing tracking processing.

Also, pan-tilt (PT) control may be realized by a configuration that physically changes the shooting direction of the video input apparatus 1101, or may be realized by image processing (e.g., cropping). Also, zoom (Z) control may be realized by a configuration that controls the imaging optical system or may be realized by image processing (e.g., cropping).

### Second Embodiment

A second embodiment describes a mode for changing the subject size based on changes in the tilt and pan values (tilt and pan angles) over time. Note that since the overall configuration of the image shooting system is similar to the first embodiment (FIG. 1), description thereof is omitted.

### Apparatus Configuration

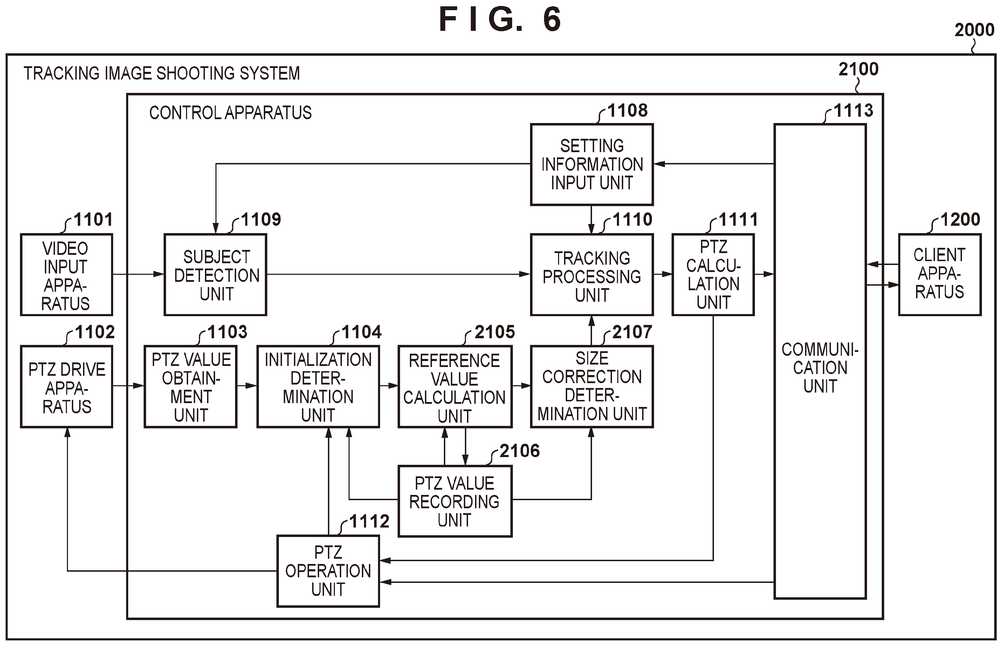

FIG. 6 is a diagram showing the functional configuration of the image shooting system in the second embodiment. A control apparatus 2100 has a PTZ value obtainment unit 1103, an initialization determination unit 1104, a reference value calculation unit 2105, a PTZ value recording unit 2106, and a size correction determination unit 2107. Also, the control apparatus 2100 has a setting information input unit 1108, a subject detection unit 1109, a tracking processing unit 1110, a PTZ calculation unit 1111, a PTZ operation unit 1112, and a communication unit 1113. Note that detailed description regarding portions (constituent elements having the same reference numerals) that are similar to the functional configuration (FIG. 2) in the first embodiment is omitted.

The reference value calculation unit 2105 calculates reference values for PT (pan and tilt) using input PTZ values. Specifically, when the current tilt value is input, the reference value calculation unit 2105 calculates the difference between the current tilt value and the previous tilt value and determines whether the period in which the difference is less than the change amount threshold has continued for greater than or equal to the reference determination period. That is, it is determined whether the tilt value is stable, similarly to the first embodiment.

The reference value calculation unit 2105 sets the tilt value at the time at which it is determined that the tilt value is stable as the tilt reference value, and the pan value at that time as the pan reference value, and outputs the PT reference values to the PTZ value recording unit 2106 together with the current PT values (current tilt value and current pan value). Furthermore, the correction determination instruction is output to the size correction determination unit 2107.

When PT values and PT reference values are input from the reference value calculation unit 2105, the PTZ value recording unit 2106 records the PT values as history information. The reference values (for tilt and pan) that were held are then recorded as the old reference values, and the reference values that are input are recorded as the new reference values.

The PTZ value recording unit 2106 outputs the past tilt value as history information to the reference value calculation unit 2105 and the initialization determination unit 1104. Also, when there is a request from the size correction determination unit 2107, the new and old reference values for tilt and pan are output.

When the correction determination instruction is input, the size correction determination unit 2107 obtains the new and old reference values for tilt and pan from the PTZ value recording unit 2106 and determines whether to correct the tracking size.

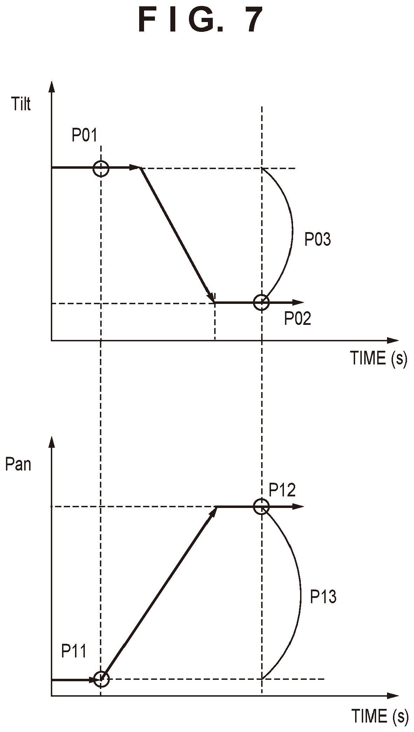

The upper figure in FIG. 7 is a diagram illustrating the temporal change in the tilt value during subject tracking. The lower figure in FIG. 7 is a diagram illustrating the temporal change in the pan value during subject tracking. Since P01 to P03 in the upper figure of FIG. 7 are similar to the first embodiment (FIG. 4A), description thereof is omitted. In the lower figure of FIG. 7, P11 represents the old pan reference value (previously set pan angle reference value), P12 represents the new pan reference value (newly set pan angle reference value), and P13 represents the difference between the new and old reference values for pan. In the present embodiment, as thresholds for determining to correct the tracking size, the tracking size correction threshold (tilt) is Dt, the tracking size correction threshold (pan) is Dp, and the reference determination period is St=1 second.

When the new and old reference values for tilt are input, the size correction determination unit 2107 calculates the difference P03 therebetween. If the tilt difference is greater than or equal to the threshold Dt, the difference between the input new and old reference values for pan is calculated. If the tilt difference P03 is greater than or equal to the threshold Dt and the pan difference P13 is less than or equal to the threshold Dp, the tracking size is corrected.

Specifically, if the pan difference P13 is less than or equal to Dp in the case where P03 is greater than or equal to the threshold Dt and "old tilt reference value < new tilt reference value", it is determined that "the subject stood up" and the tracking size is determined as "small". On the other hand, if the pan difference P13 is less than Dp in the case where P03 is greater than or equal to the threshold Dt and "old tilt reference value > new tilt reference value", it is determined that "the subject sat down" and the tracking size is determined as "large". The size correction determination unit 2107 outputs information of the determined tracking size to the tracking processing unit 1110.

### Operations of Apparatus

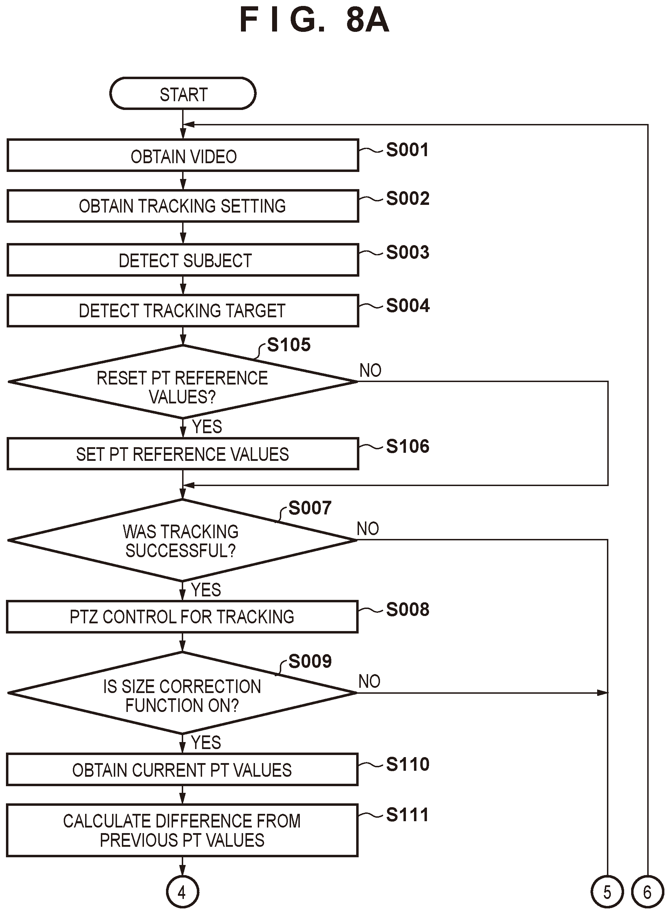

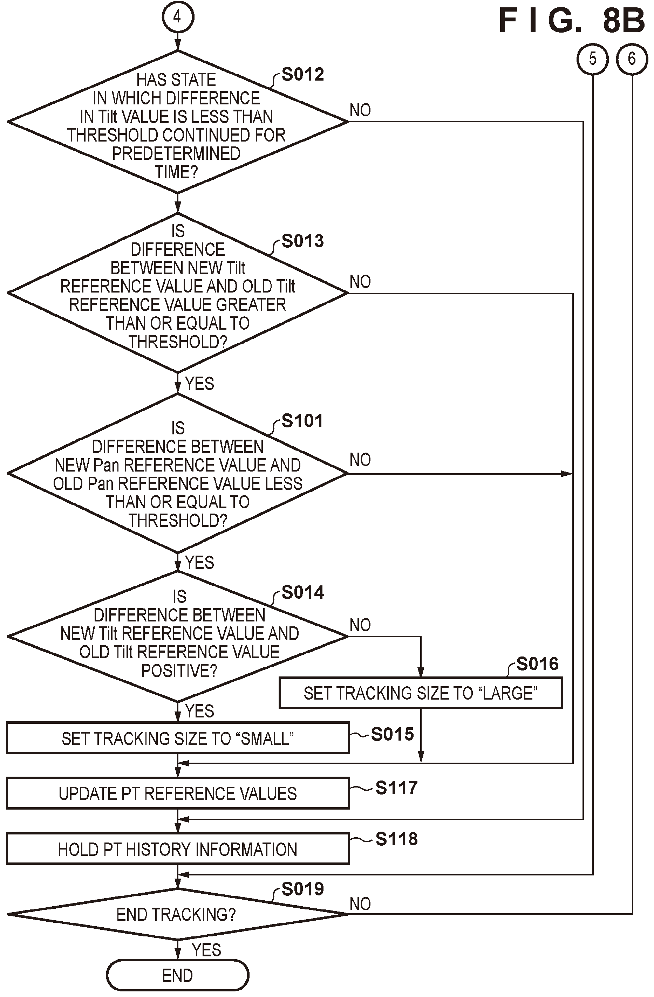

FIGS. 8A and 8B are flowcharts showing a control procedure during subject tracking in the second embodiment. Note that detailed description regarding portions (steps having the same reference numerals) that are similar to the flowcharts (FIGS. 5A and 5B) in the first embodiment is omitted.

In step S105, the initialization determination unit 1104 determines whether to initialize the tilt reference value and the pan reference value. The processing proceeds to step S106 if true (YES in step S105), and proceeds to step S007 if false (NO in step S105). In step S106, the reference value calculation unit 2105 sets the current tilt value as the tilt reference value, and sets the current pan value as the pan reference value.

In step S110, the PTZ value obtainment unit 1103 obtains the current PT values (current tilt value and current pan value) from the PTZ drive apparatus 1102. In step S111, the reference value calculation unit 2105 calculates the difference between the previous tilt value and the current tilt value and the difference between the previous pan value and the current pan value. Note that the previous tilt value and previous pan value are the tilt value and pan value in the immediately previous iteration of loop processing.

In step S101, the size correction determination unit 2107 determines whether the difference between the new pan reference value and the old pan reference value is greater than or equal to a threshold. The processing proceeds to step S014 if true (YES in step S101), and proceeds to step S117 if false (NO in step S101).

In step S117, the reference value calculation unit 1105 updates the tilt reference value and the pan reference value. When the PT values and PT reference values are input, the PTZ value recording unit 1106, in step S118, records the PT values as history information. That is, the reference values (for tilt and pan) that were held are recorded as the old reference values, and the reference values that are newly input are recorded as the new reference values.

According to the second embodiment as described above, the tracking size (subject size) is changed on the basis of changes in the tilt and pan values over time. In particular, by taking changes in the pan value over time into consideration in determining the tilt reference value, it becomes possible to suppress excessive zoom operation caused by the operations accompanying lateral (pan direction) movement. For example, control can be performed so as to not change the tracking size while the subject is moving up or down a slope/flight of stairs.

### Third Embodiment

A third embodiment describes a mode for changing the subject size based on changes in the tilt and zoom values (tilt angle and zoom value) over time. Note that since the overall configuration of the image shooting system is similar to the first embodiment (FIG. 1), description thereof is omitted.

### Apparatus Configuration

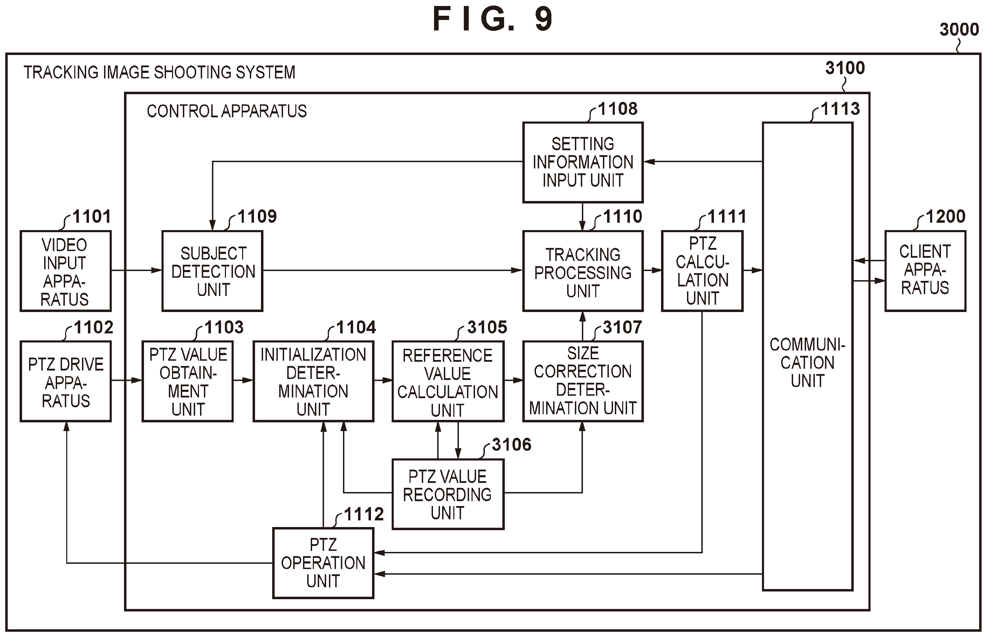

FIG. 9 is a diagram showing the functional configuration of the image shooting system in the third embodiment. A control apparatus 3100 has a PTZ value obtainment unit 1103, an initialization determination unit 1104, a reference value calculation unit 3105, a PTZ value recording unit 3106, and a size correction determination unit 3107. Also, the control apparatus 3100 has a setting information input unit 1108, a subject detection unit 1109, a tracking processing unit 1110, a PTZ calculation unit 1111, a PTZ operation unit 1112, and a communication unit 1113. Note that detailed description regarding portions (constituent elements having the same reference numerals) that are similar to the functional configuration (FIG. 2) in the first embodiment is omitted.

The reference value calculation unit 3105 calculates reference values for TZ (tilt and zoom) using input PTZ values. Specifically, when the current tilt value is input, the reference value calculation unit 3105 calculates the difference between the current tilt value and the previous tilt value, and determines whether the period in which the difference is less than a change amount threshold has continued for greater than or equal to the reference determination period. That is, it is determined whether the tilt value is stable, similarly to the first embodiment.

The reference value calculation unit 3105 sets the tilt value at the time at which it is determined that the tilt value is stable as the tilt reference value, and the zoom value at that time as the zoom reference value, and outputs the TZ reference values to the PTZ value recording unit 3106 together with the current TZ values (current tilt value and current zoom value). Furthermore, a correction determination instruction is output to the size correction determination unit 3107.

When the TZ values and TZ reference values are input from the reference value calculation unit 3105, the PTZ value recording unit 3106 records the TZ values as history information. The reference values (tilt and zoom) that were held are then recorded as the old reference values, and the reference values that are input are recorded as the new reference values.

The PTZ value recording unit 3106 outputs the past tilt value as history information to the reference value calculation unit 3105 and the initialization determination unit 1104. Also, when there is a request from the size correction determination unit 3107, the new and old reference values for tilt and zoom are output.

When the correction determination instruction is input, the size correction determination unit 3107 obtains the new and the old reference values for tilt and zoom from the PTZ value recording unit 3106 and determines whether to correct the tracking size.

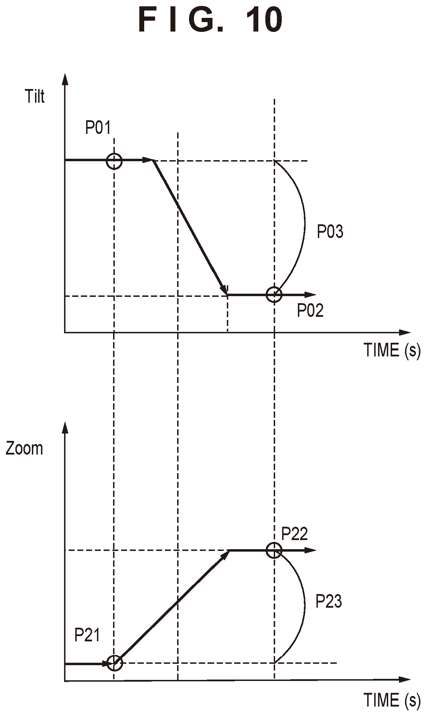

The upper figure in FIG. 10 is a diagram illustrating the temporal change in the tilt value during subject tracking. The lower figure in FIG. 10 is a diagram illustrating the temporal change in the zoom value during subject tracking. For example, if the distance between the video input apparatus 1101 and the subject changes due to movement of the subject, the zoom value changes such that the subject size in the shot video remains constant. Since P01 to P03 in the upper figure of FIG. 10 are similar to the first embodiment (FIG. 4A), description thereof is omitted. In the lower figure of FIG. 10, P21 represents the old zoom reference value (previously set zoom reference value), P22 represents the new zoom reference value (newly set zoom reference value), and P23 represents the difference (amount of change) between the new zoom reference value and the old reference value. In the present embodiment, as thresholds for determining to correct the tracking size, the tracking size correction threshold (tilt) is Dt, the tracking size correction threshold (zoom) is Dz, and the reference determination period is St = 1 second.

When the new and old reference values for tilt are input, the size correction determination unit 3107 calculates the difference P03 therebetween. If the tilt difference is greater than or equal to the threshold Dt, the difference between the input new and old reference values for zoom is calculated. If the tilt difference P03 is greater than or equal to the threshold Dt and the zoom difference P23 is less than or equal to the threshold Dz, the tracking size is corrected.

Specifically, if the zoom difference is less than Dz in the case where P03 is greater than or equal to the threshold Dt and "old tilt reference value < the new tilt reference value", it is determined that "the subject stood up" and the tracking size is determined as "small". On the other hand, if the zoom difference is less than or equal to Dz in the case where P03 is greater than or equal to the threshold Dt and "old tilt reference value > new tilt reference value", it is determined that "the subject sat down" and the tracking size is determined as "large". The size correction determination unit 3107 outputs information of the determined tracking size to the tracking processing unit 1110.

### Operations of Apparatus

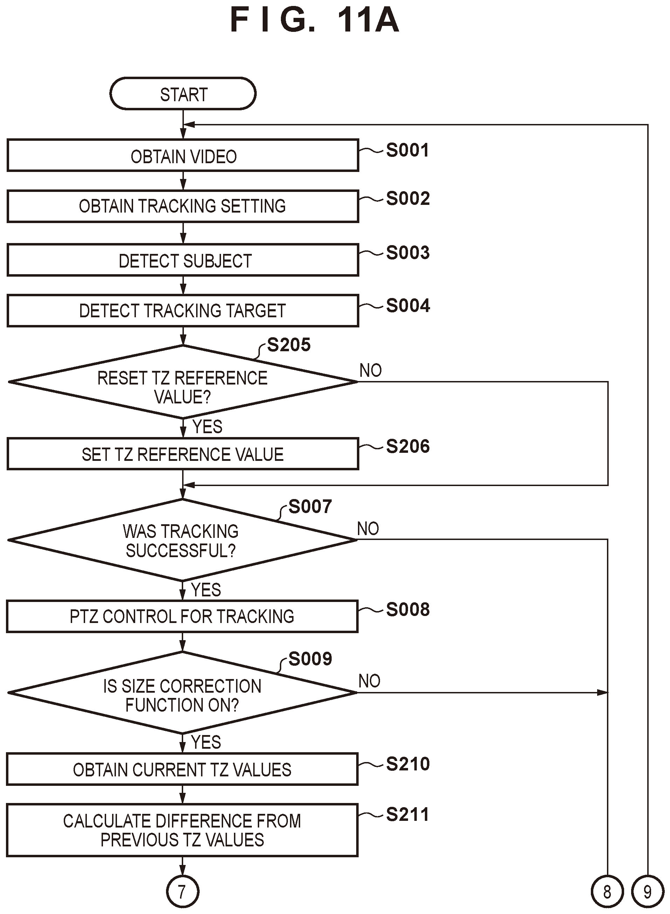

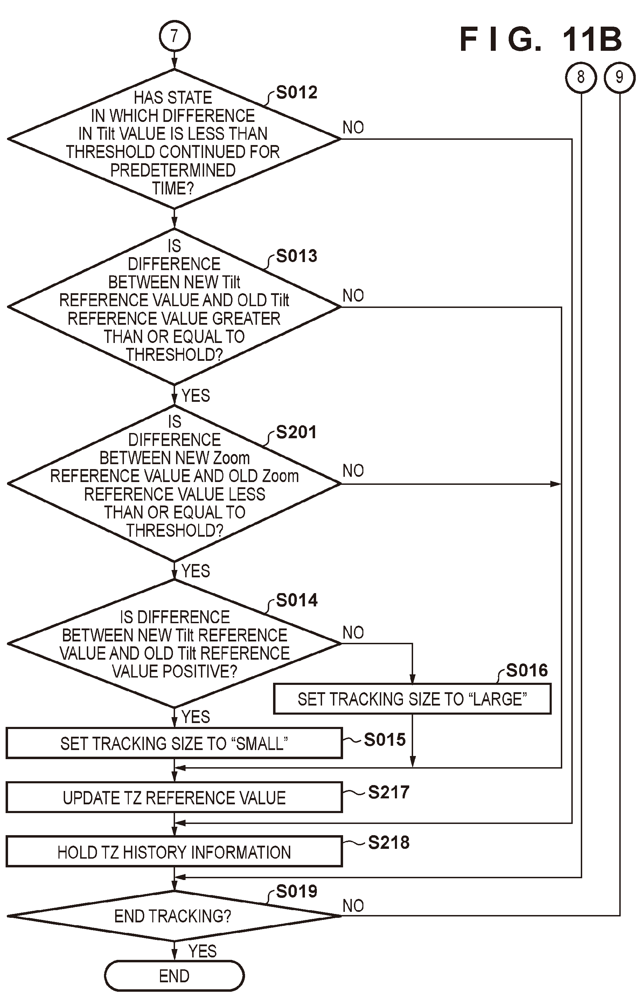

FIGS. 11A and 11B are flowcharts showing a control procedure during subject tracking in the third embodiment. Note that detailed description regarding portions (steps having the same reference numerals) that are similar to the flowcharts (FIGS. 5A and 5B) in the first embodiment is omitted.

In step S205, the initialization determination unit 1104 determines whether to initialize the tilt reference value and the zoom reference value. The processing proceeds to step S106 if true (YES in step S205), and proceeds to step S007 if false (NO in step S205). In step S206, the reference value calculation unit 3105 sets the current tilt value as the tilt reference value and the current zoom value as the zoom reference value.

In step S210, the PTZ value obtainment unit 1103 obtains the current TZ values (current tilt value and current zoom value) from the PTZ drive apparatus 1102. In step S211, the reference value calculation unit 3105 calculates the difference between the previous tilt value and the current tilt value, and the difference between the previous zoom value and the current zoom value. Note that the previous tilt value and the previous zoom value are the tilt value and the zoom value in the immediately previous iteration of loop processing.

In step S201, the size correction determination unit 2107 determines whether the difference between the new zoom reference value and the old zoom reference value is greater than or equal to a threshold. The processing proceeds to step S014 if true (YES in step S201), and proceeds to step S217 if false (NO in step S201).

In step S217, the reference value calculation unit 3105 updates the tilt reference value and the zoom reference value. When the TZ values and TZ reference values are input, the PTZ value recording unit 3106, in step S218, records the TZ values as history information. That is, the reference values (for tilt and zoom) that were held are recorded as the old reference values, and the reference values that are newly input are recorded as the new reference values.

As described above, according to the third embodiment, the tracking size (subject size) is changed on the basis of changes in the tilt and zoom values over time. In particular, by taking changes in the zoom value over time into consideration in determining the tilt reference value, it becomes possible to suppress excessive zoom operation caused by the operations accompanying size change. For example, in the case where the video input apparatus 1101 is installed high up such as on a ceiling or a pillar, control can be performed so as to not change the tracking size while the subject is moving closer to the video input apparatus 1101.

Note that, in FIG. 11B, step S013 (calculation of difference in tilt reference value) and step S201 (calculation of difference in zoom reference value) are executed separately, but these steps may be executed together. For example, it becomes possible to execute these steps together by using the difference between values obtained by dividing the tilt reference values by the angle of view (corresponding to zoom reference values).

### Fourth Embodiment

The fourth embodiment describes a mode for gradually changing the subject size based on changes in the tilt value over time (e.g., three sizes "large", "medium", "small"). For example, by performing correction to gradually reduce the tracking size when the subject stands up, it becomes possible to suppress the occurrence of loss of tracking due to the subject moving partially offscreen. Note that since the overall configuration of the image shooting system is similar to the first embodiment (FIG. 1), description thereof is omitted.

### Apparatus Configuration

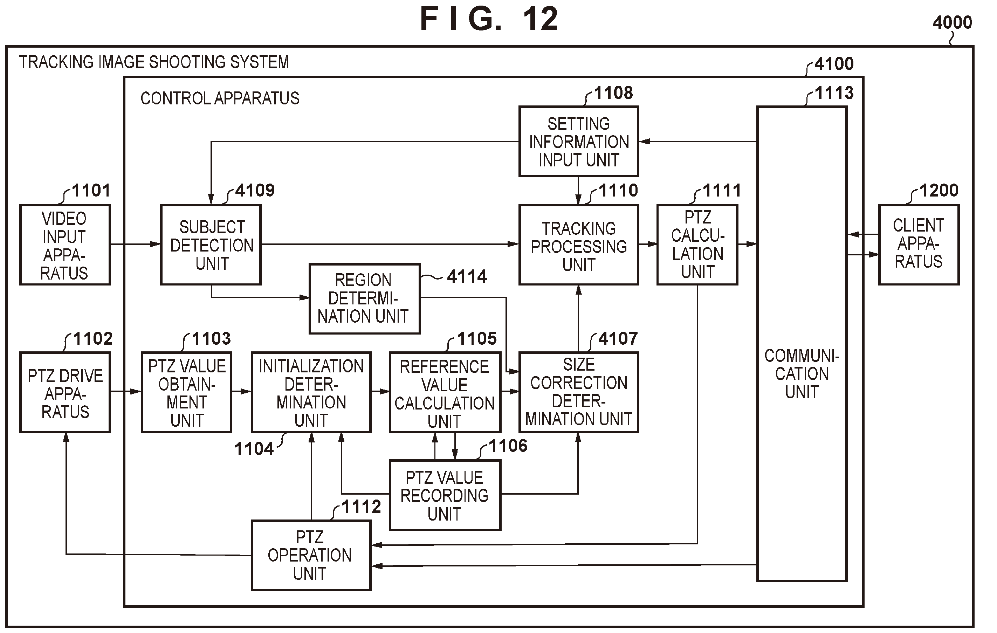

FIG. 12 is a diagram showing the functional configuration of the image shooting system in the fourth embodiment. A control apparatus 4100 has a PTZ value obtainment unit 1103, an initialization determination unit 1104, a reference value calculation unit 1105, a PTZ value recording unit 1106, a size correction determination unit 4107, and a region determination unit 4114. Also, the control apparatus 4100 has a setting information input unit 1108, a subject detection unit 4109, a tracking processing unit 1110, a PTZ calculation unit 1111, a PTZ operation unit 1112, and a communication unit 1113. Note that detailed description regarding portions (constituent elements having the same reference numerals) that are similar to the functional configuration (FIG. 2) in the first embodiment is omitted.

The subject detection unit 4109 performs detection processing for detecting a subject included in an image (frame image) input from the video input apparatus 1101, and outputs detection information to the tracking processing unit 1110 and the region determination unit 4114. The detection information includes information of the position (region) of the subject in the frame image.

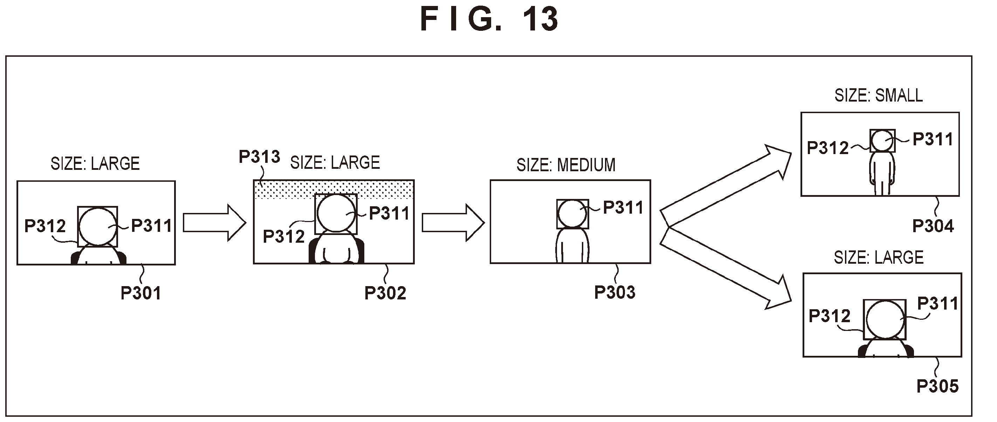

When the detection information is input, the region determination unit 4114 determines whether the subject overlaps at least partially with a size correction region set in advance. In the present embodiment, the size correction region is 20 percent of the region from the upper portion of the frame image (see FIG. 13), but may be other regions. For example, the size correction region may be a region set by the user, or may be a region that is dynamically changed depending on the subject size.

The size correction determination unit 4107 changes the tracking size to "medium" when the region determination unit 4114 determines that the subject overlaps with the size correction region (outputs "incursion information" described later). The subject moving partially offscreen and tracking being lost, due to the subject carrying out the action of standing up while being tracked in the sitting state ("large" tracking size) is thereby avoided. Thereafter, if the amount of change in tilt exceeds a threshold, the tracking size is changed to "small" (similarly to first embodiment). Note that if the amount of change in tilt does not exceed the threshold for a certain period when the tracking size is "medium" (if it is not determined that subject is in standing state), it is determined that the subject has returned to the sitting state and the tracking size is changed to "large".

FIG. 13 is a diagram illustrating control for changing the subject size using the size correction region. P301 to P303 show changes in the frame image when the subject goes to stand up from the sitting state. P304 shows the frame image when the subject has stood up after P303, and P305 shows the frame image when the subject has sat down again after P303 without standing up. Also, P311 represents the tracked subject, P312 represents a detection rectangle of the tracked subject, and P313 represents the size correction region.

In the P301, the subject is in a sitting state and is being tracked with the tracking size set to "large". P302 shows a state in which the upper edge of the detection rectangle P312 has entered the size correction region P313 in the upper portion of the frame image, due to the tracking tilt control not being performed in time when the subject goes to stand up. At this time, the region determination unit 4114 outputs incursion information to the size correction determination unit 4107.

When incursion information is input, the size correction determination unit 4107 changes the tracking size to "medium" as shown in P303 in order to prevent loss of tracking. If the amount of change in tilt exceeds the threshold, it is determined that the subject has stood up (similarly to first embodiment), and the tracking size is changed to "small" as shown in P304. Also, if the amount of change in tilt does not exceed the threshold for a certain period with the tracking size set to "medium", it is determined that the subject has returned to the sitting state and the tracking size is changed to "large" as shown in P305. The size correction determination unit 4107 outputs information of the determined tracking size to the tracking processing unit 1110.

### Operations of Apparatus

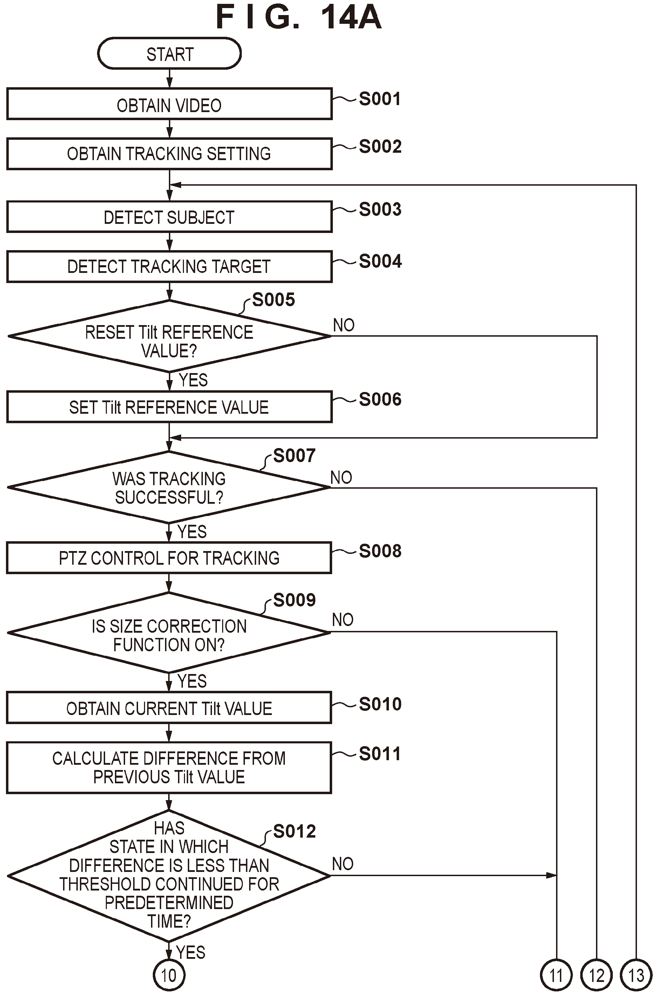

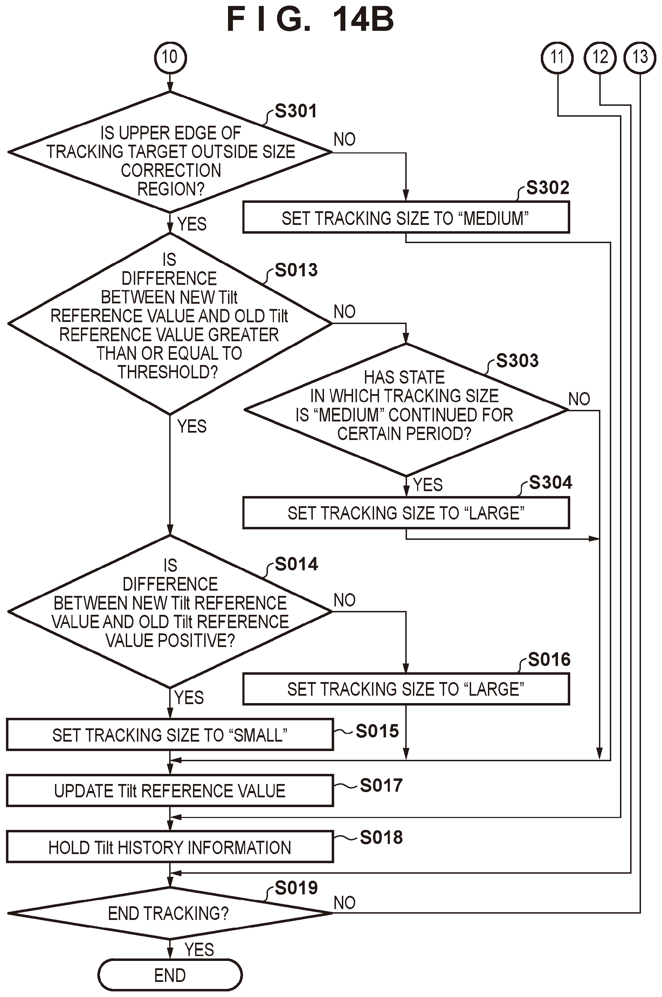

FIGS. 14A and 14B are flowcharts showing a control procedure during subject tracking in the fourth embodiment. Note that detailed description regarding portions (steps having the same reference numerals) that are similar to the flowcharts (FIGS. 5A and 5B) in the first embodiment is omitted.

In step S301, the region determination unit 4114 determines whether the upper edge of the subject detection rectangle is outside the size correction region (non-overlapping state). The processing proceeds to step S013 if true (YES (outside of region) in step S301), and proceeds to step S302 if false (NO (inside of region) in step S301).

In step S302, the size correction determination unit 4107 changes the tracking size to "medium". In step S303, the size correction determination unit 4107 determines whether the state in which the tracking size is "medium" has continued for a certain period or longer. The processing proceeds to step S304 if true (YES in step S303), and proceeds to step S017 if false (NO in step S303). In step S304, the size correction determination unit 4107 determines that the subject has sat down again and changes the tracking size to "large".

According to the fourth embodiment as described above, the tracking size (subject size) is gradually changed on the basis of changes in the tilt value over time. In particular, it becomes possible to realize visual effects such as making the tracked subject appear larger when the subject is sitting, and making the subject appear smaller when the subject is moving in a standing state, while preventing loss of tracking when the subject stands up (sitting state → standing state).

### Other Embodiments

Embodiment(s) of the present disclosure can also be realized by a computer of a system or apparatus that reads out and executes computer-executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer-executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer-executable instructions. The computer-executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. A control apparatus (1100) comprising:
obtainment means (1103) for obtaining an angle value indicating a shooting direction of an image capturing apparatus;
determination means (1105) for determining a first angle reference value, in a case where a state in which change in the obtained angle value is less than a predetermined value continues for a predetermined time period, and determining a second angle reference value after the first angle reference value is determined; and
control means (1112) for controlling an angle of view of the image capturing apparatus, according to a first difference between the first angle reference value and the second angle reference value.

2. The control apparatus according to claim 1,
wherein the angle value is obtained at a predetermined time interval.

3. The control apparatus according to claim 1,
wherein the first angle reference value is determined based on the angle value obtained in the predetermined time period.

4. The control apparatus according to claim 3,
wherein the first angle reference value is any one of an angle value obtained first in the predetermined time period, an angle value obtained last in the predetermined time period, an average value of angle values obtained in the predetermined time period, and a median value of angle values obtained in the predetermined time period.

5. The control apparatus according to claim 1, further comprising:
third determination means (1107) for determining a target size of a subject in an image captured by the image capturing apparatus, based on the first difference, wherein
the angle of view is controlled based on the target size.

6. The control apparatus according to claim 5, wherein
the target size is changed in a case where the first difference is greater than a first threshold, and
the target size is not changed in a case where the first difference is less than the first threshold.

7. The control apparatus according to claim 5, wherein
a target size smaller than a current target size is determined, in a case where the first difference is greater than a first threshold and the second angle reference value is greater than the first angle reference value; and
a target size larger than the current target size is determined, in a case where the first difference is greater than or equal to the first threshold and the second angle reference value is less than the first angle reference value.

8. The control apparatus according to claim 1, wherein
the angle value is an angle in a tilt direction of the image capturing apparatus, and
the first angle reference value and the second angle reference value are reference values in the tilt direction.

9. The control apparatus according to claim 8, wherein
an angle value in a pan direction of the image capturing apparatus is further obtained;
a first pan angle reference value that corresponds to the first angle reference value and is a reference value for the pan direction, and a second pan angle reference value that corresponds to the second angle reference value and is a reference value for the pan direction are further determined; and
the angle of view is controlled according further to a second difference between the first pan angle reference value and the second pan angle reference value.

10. The control apparatus according to claim 9, wherein
a target size of a subject in an image captured by the image capturing apparatus is further determined, based on the first difference,
the angle of view is controlled based on the target size,
the target size is changed in a case where the first difference is greater than or equal to a first threshold and the second difference is less than a second threshold, and
the target size is not changed in a case where the first difference is greater than or equal to the first threshold and the second difference is greater than the second threshold.

11. The control apparatus according to claim 8, wherein
a zoom value of the image capturing apparatus is further obtained,
a first zoom reference value that corresponds to the first angle reference value and is a reference value for zoom, and a second zoom reference value that corresponds to the second angle reference value and is a reference value for zoom are further determined; and
the angle of view is controlled according further to a third difference between the first zoom reference value and the second zoom reference value.

12. The control apparatus according to claim 5, further comprising:
detection means (4114) for detecting that a region of the subject overlaps with a predetermined region of the image; and
the target size is determined in response to occurrence of the overlap being detected.

13. A control apparatus comprising:
obtainment means (1103) for obtaining a shooting direction of an image capturing apparatus configured to capture a person and an angle of view of the image capturing apparatus; and
control means (1112) for controlling the shooting direction of the image capturing apparatus and the angle of view of the image capturing apparatus, the angle of view being changed in response to a standing action or a sitting action carried out by the person, and the angle of view being not changed in a case of a bowing action of the person.

14. A control method comprising:
obtaining (S010) an angle value indicating a shooting direction of an image capturing apparatus;
determining (S017) a first angle reference value, in a case where a state in which change in the obtained angle value is less than a predetermined value continues for a predetermined time period;
determining (S017) a second angle reference value after the first angle reference value is determined; and
controlling (S015; S016) an angle of view of the image capturing apparatus, according to a difference between the first angle reference value and the second angle reference value.

15. A computer program comprising instructions that, when the program is executed by a computer, cause the computer to carry out the control method of claim 14.
